# EUROPEAN PATENT APPLICATION

(11) **EP 2 275 927 A2**
(43) Date of publication of application: **19.01.2011**
(21) Application number: 10167872.0
(22) Date of filing: 30.06.2010
(51) Int. Cl.: G06F 9/38

(54) **Processor and instruction control method**

(30) Priority: 30.06.2009 JP 2009156373
(71) Applicant: FUJITSU LIMITED, Kawasaki-shi, Kanagawa 211-8588 (JP)
(72) Inventor: Sunayama, Ryuichi, Kawasaki-shi Kanagawa 211-8588 (JP)
(74) Representative: Fenlon, Christine Lesley

(57) **Abstract**

A processor (10) connects to a cache memory that stores data frequently used among data stored in a main memory. The processor (10) includes a first free-space determining unit (12) that determines whether there is free space in an instruction buffer; a second free-space determining unit (13) that manages an instruction fetch request queue that stores an instruction fetch data to be sent from the cache memory to the main memory, and determines whether a move-in buffer in the cache memory has free space for at least two entries if the first free-space determining unit determines that there is free space; and an instruction control unit (12) that outputs an instruction prefetch request to the cache memory in accordance with an address boundary corresponding to a line size of the cache line, if the second free-space determining unit (13) determines that the move-in buffer has free space.

## Description

### FIELD

The embodiments discussed herein are directed to a processor and an instruction control method.

### BACKGROUND

With the aim of improving the performance of processors such as central processing units (CPUs) and micro processing units (MPUs), an instruction prefetch control is typically used in which instructions that are predicted to be used in the future are read, in advance, into a high-speed memory, such as a cache memory, from the main memory.

A processor has a functioning unit that includes a main memory, a primary cache (L1 cache), a secondary cache (L2 cache), an instruction control unit, a decoder, and the like. The main memory is a main storage that stores therein data, programs, or the like, and is a semiconductor memory, such as a random access memory (RAM) or a read only memory (ROM), to which an information processing unit such as a CPU can directly read and write.

The secondary cache is a cache memory that stores therein instructions and data that are stored in the main memory and that are used relatively frequently. The secondary cache is a cache memory capable of accessing data faster than the main memory. The primary cache is a cache memory that stores therein data (instructions and data) that is more frequently used than information stored in the secondary cache. The primary cache processes are faster than the secondary cache.

The instruction control unit is a control unit that performs fetch control and prefetch control of instructions. The decoder is a control unit that decodes instructions read by the instruction control unit and executes processes. In addition to the functioning unit described above, the processor can, of course, have another commonly-used functioning unit, e.g., a program counter that indicates the next instruction address to be executed or a commitment determining unit that determines whether execution of the instruction is completed.

The instruction prefetch control described above is independently performed by both the instruction control unit and the L1 cache. The instruction control unit replaces an instruction fetch request with a prefetch request only when there is no free space in an instruction buffer that temporarily stores therein instruction fetch data sent from the cache. In such a case, the L1 cache does not always need to respond to the instruction control unit regarding the instruction regardless of whether a cache hit occurs with respect to the prefetch request. Furthermore, the address of the instruction fetch depends on the data capacity equal to one entry of an instruction buffer. Because the capacity of one entry of the instruction buffer is, for example, 32 bytes, the instruction fetch address is issued in accordance with 32-byte address boundary, (i.e., in units). This is the same for the instruction prefetch. Because each cache line of the L1 cache is 128 bytes per one line, a request is repeatedly issued to the same line.

When, due to a request received from the L2 cache or a request issued from another L1 cache to the L2 cache, the L1 cache cannot receive a new instruction fetch request from the instruction control unit, the L1 cache issues a prefetch request to the L2 cache. However, because the L1 cache cannot refer to a branch prediction mechanism, the L1 cache sometimes issues a request in the sequential direction, i.e., in the instruction-execution-order direction or the instruction execution address direction, although the L1 cache has to issue the request to a branch prediction address.

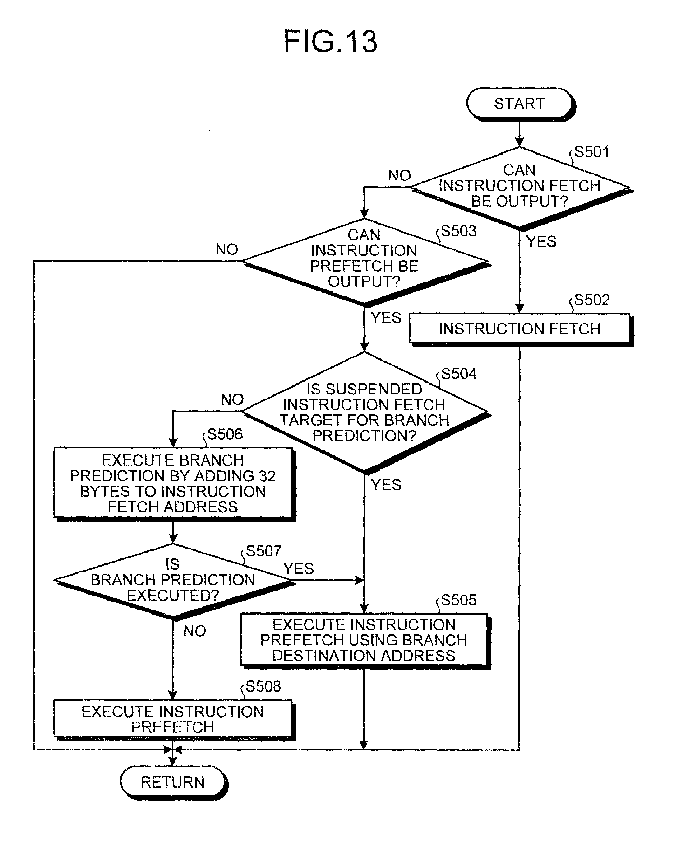

The above-described process is specifically described with reference to FIG. 13. If the instruction control unit of the processor according to the conventional technology determines that an instruction fetch request can be output (YES at Step S501), the instruction control unit outputs the instruction fetch request to the L1 cache (Step S502).

In contrast, if the instruction control unit of the processor according to the conventional technology determines that the instruction fetch request cannot be output (NO at Step S501), the instruction control unit determines whether an instruction prefetch request can be output to the L1 cache (Step S503). At this time, if the instruction control unit of the processor determines that the instruction prefetch request cannot be output because there is no free space in the instruction buffer (NO at Step S503), the instruction control unit repeats the processes by returning to Step S501.

In contrast, if the instruction control unit of the processor determines that the instruction prefetch request can be output because there is free space in the instruction buffer (YES at Step S503), the instruction control unit determines whether the suspended instruction fetch is the target for the branch prediction (Step S504). Specifically, the instruction control unit of the processor determines whether an address of an instruction fetch request destination, which is originally supposed to be executed but cannot be executed due to insufficient space or the like, is a branch prediction address (branch destination address) that is subjected to branch prediction performed by the branch prediction mechanism.

If the suspended instruction fetch is the target for the branch prediction (YES at Step S504), the instruction control unit of the processor outputs the instruction prefetch request to the L1 cache using the branch destination address predicted by the branch prediction mechanism (Step S505). Then, the instruction control unit repeats the processes by returning to Step S501. Specifically, if an address of an instruction fetch request destination, which is originally supposed to be executed but cannot be executed due to insufficient space or the like, is a branch destination address that is subjected to branch prediction performed by the branch prediction mechanism, the instruction control unit of the processor outputs the instruction prefetch request to the L1 cache.

Furthermore, if the suspended instruction fetch is not the target for the branch prediction (NO at Step S504), the instruction control unit of the processor outputs a request, to the branch prediction mechanism, for execution of the branch prediction using a new address obtained by adding 32 bytes to the current target instruction fetch address (Step S506). Specifically, if an address of an instruction fetch request destination, which is originally supposed to be executed but cannot be executed due to insufficient space or the like, is not a branch destination address that is subjected to branch prediction performed by the branch prediction mechanism, the instruction control unit outputs a request, to the branch prediction mechanism, for execution of the branch prediction using a new address.

Then, if the branch prediction mechanism performs the branch prediction (YES at Step S507), the instruction control unit of the processor performs the process of Step S505. In contrast, if the branch prediction mechanism does not perform the branch prediction (NO at Step S507), the instruction control unit of the processor outputs the instruction prefetch request to the L1 cache (Step S508).

However, with the conventional technology described above, unnecessary instruction prefetch requests or the like occur, which causes performance degradation of the processor. Specifically, as described above, both the instruction control unit and the L1 cache individually issue a prefetch under different conditions. Accordingly, a phenomenon occurs in which a request is issued to an unnecessary area or in which a necessary area is replaced. The processor executes such an operation as if it is actually needed, resulting in the occurrence of a case in which performance is not adequate or is degraded.

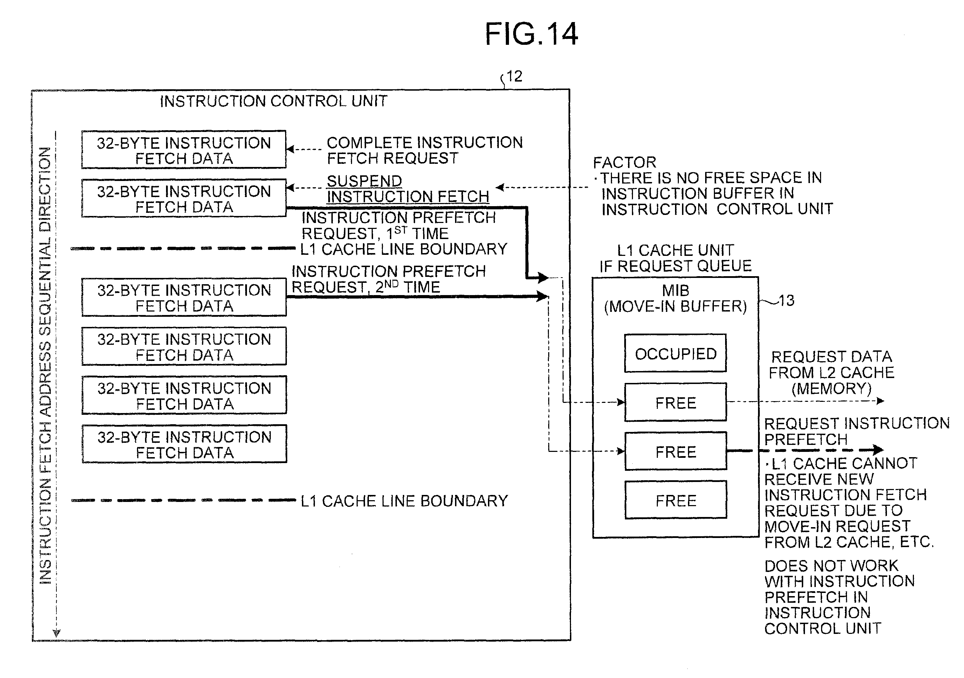

For example, as illustrated in FIG. 14, if there is no free space in an instruction buffer that stores therein instructions received from the L1 cache, the instruction control unit repeatedly outputs, due to the suspension of the instruction fetch, a request, to the L1 cache, by replacing the instruction fetch request with the instruction prefetch request. Furthermore, regardless of the instruction prefetch request that is output from the instruction control unit, if the L1 cache cannot receive a new instruction fetch request due to, for example, a move-in request from the L2 cache, the L1 cache issues an instruction prefetch request to the L2 cache.

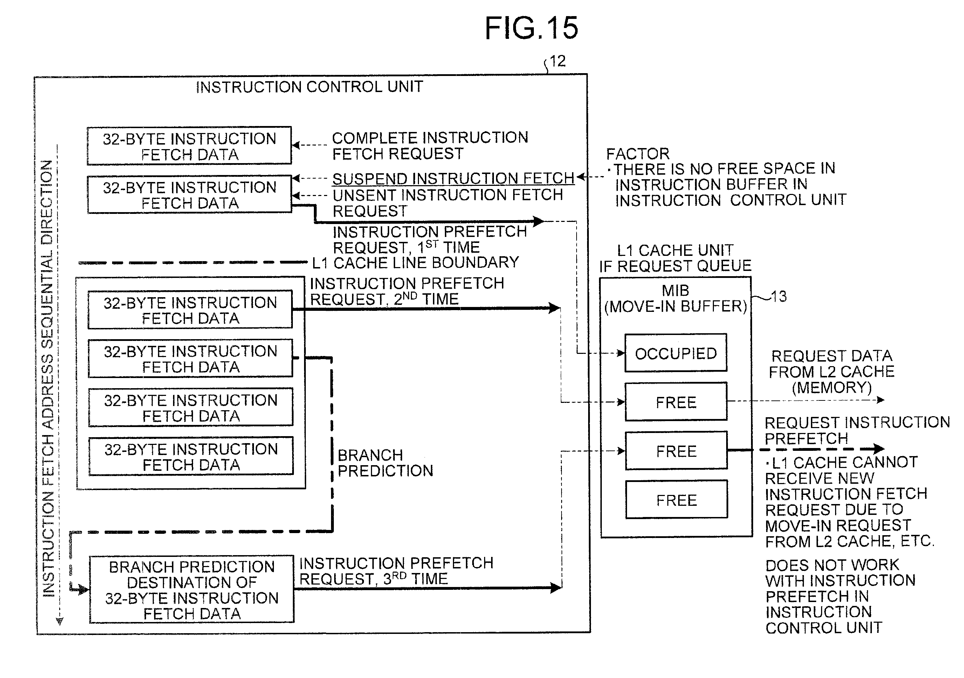

As illustrated in FIG. 15, the instruction control unit issues, to the L1 cache, a third instruction prefetch request using a branch prediction address that is predicted by the branch prediction mechanism. In such a case, the L1 cache needs to issue an instruction prefetch request using the branch prediction address. However, because the L1 cache cannot refer to the branch prediction mechanism, the L1 cache issues, in the usual way, an instruction prefetch request in the sequential direction of the instruction fetch address. In other words, as can be seen from FIGS. 14 and 15, the instruction control unit does not work with the L1 cache with respect to instruction prefetch requests. Accordingly, even when either one of the instruction control unit and the L1 cache correctly issues an instruction prefetch request, other one still issues an unnecessary instruction prefetch request, which causes instruction prefetch requests that are lacking in consistency to be generated.

Accordingly, it is desirable to provide an instruction control device, an instruction control method, and an arithmetic circuit that can reduce the occurrence of, for example, unnecessary instruction prefetch requests and prevent performance degradation of the processor.
[Patent Document 1] Japanese Laid-open Patent publication No. 2000-357090
[Patent Document 2] Japanese Laid-open Patent publication No. 08-272610
[Patent Document 3] Japanese Laid-open Patent Publication No. 2001-166934

### SUMMARY

According to an embodiment of an aspect of the invention, a processor connecting to a cache memory that stores data frequently used among data stored in a main memory, the processor includes: a first free-space determining unit that determines whether there is free space in an instruction buffer that stores therein instruction fetch data received from the cache memory; a second free-space determining unit that manages an instruction fetch request queue that stores an instruction fetch data to be sent from the cache memory to the main memory, and determines whether a move-in buffer in the cache memory has free space for at least two entries if the first free-space determining unit determines that there is free space in the instruction buffer; and an instruction control unit that outputs an instruction prefetch request to the cache memory in accordance with an address boundary corresponding to a line size of the cache line, if the second free-space determining unit determines that the move-in buffer in the cache memory has free space for at least two entries.

According to another embodiment of an aspect of the invention, an instruction control method includes: determining whether there is free space in an instruction buffer that stores therein instruction fetch data received from a cache memory that stores data frequently used among data stored in a main memory; managing an instruction fetch request queue that stores instruction fetch data to be sent from the cache memory to the main memory, and determines whether a move-in buffer in the cache memory has free space for at least two entries if it is determined that there is free space in the instruction buffer; determining whether a move-in buffer in the cache memory has free space for at least two entries or more; and outputting an instruction prefetch request to the cache memory in accordance with an address boundary corresponding to a line size of the cache line, if the move-in buffer in the cache memory has free space for at least two entries.

### BRIEF DESCRIPTION OF DRAWINGS

FIG. 1 is a block diagram illustrating the configuration of an instruction control device according to a first embodiment;
FIG. 2 is a schematic diagram illustrating the configuration of an IBUFF and the connection relation between the IBUFF and an L1 cache;
FIG. 3 is a schematic diagram illustrating an example of an instruction prefetch pipe control;
FIG. 4 is a schematic diagram illustrating an example of the pipe control relation between an instruction fetch pipe and an instruction prefetch pipe;
FIG. 5 is a schematic diagram explaining an instruction prefetch control;
FIG. 6 is a schematic diagram explaining an instruction prefetch control using a branch prediction result;
FIG. 7 is a flowchart illustrating the flow of a process performed by the instruction control device according to the first embodiment;
FIG. 8 is a timing chart in a case in which cycle 3 becomes the last cycle of an instruction fetch request;
FIG. 9 is a timing chart in a case in which the cycle 3 becomes the last cycle of the instruction fetch request and is predicted to be branched in cycle 5;
FIG. 10 is a timing chart in a case in which an instruction fetch request stops due to PORT-BUSY;
FIG. 11 is a timing chart in a case in which an instruction fetch in the cycle 3 is predicted to be branched in the cycle 5;
FIG. 12 is a timing chart in a case in which an instruction fetch resumes in cycle 12;
FIG. 13 is a flowchart illustrating the flow of a conventional instruction prefetch control process;
FIG. 14 is a schematic diagram explaining a conventional instruction prefetch control; and
FIG. 15 is a schematic diagram explaining an instruction prefetch control using a conventional branch prediction result.

### DESCRIPTION OF EMBODIMENTS

Embodiments of the present invention will be explained with reference to accompanying drawings. The present invention is not limited to the embodiment described below.

### [a] First Embodiment

An instruction control device embodying the present invention may be connected to, for example, various kinds of cache memories or branch prediction mechanisms; may be a processor such as a CPU or a MPU; and may be used in an information processing unit such as a computer. Furthermore, a processor having the instruction control device may use a pipeline method, and furthermore, can execute instructions at high speed by performing out-of-order execution. An instruction control device embodying the present invention may execute an instruction prefetch control, which is normally independently performed both in an L1 cache unit and an instruction control unit, using only an instruction control unit. Accordingly, it is possible to reduce the occurrence of, for example, unnecessary instruction prefetch requests and to prevent performance degradation of the processor.

For a first embodiment, the configuration of the instruction control device, the flow of processing thereof, a timing chart, advantages, and the like will be described with reference to the accompanying drawings.

### Configuration of the instruction control device

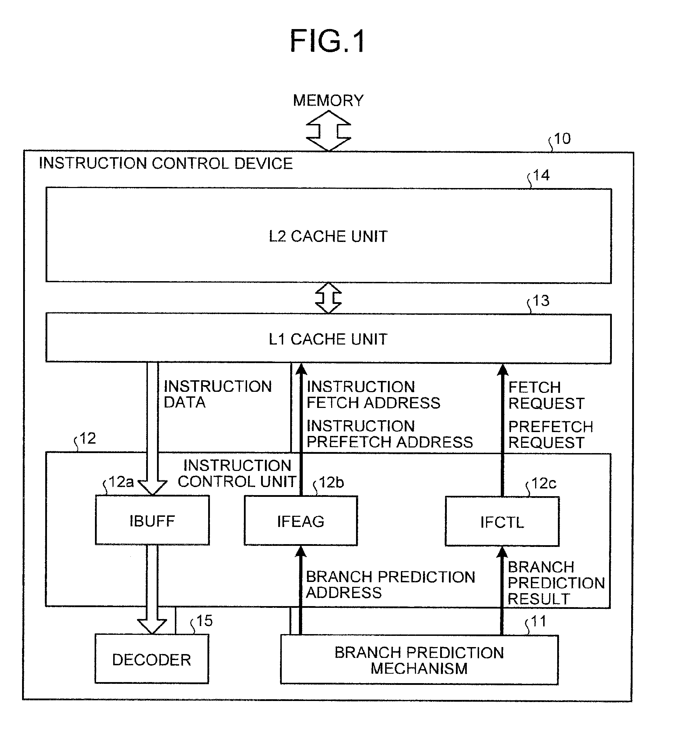

First, the configuration of the instruction control device according to the first embodiment will be described with reference to FIG. 1. FIG. 1 is a block diagram illustrating the configuration of the instruction control device according to the first embodiment.

As illustrated in FIG. 1, an instruction control device 10 has a branch prediction mechanism 11, an instruction control unit 12, an L1 cache unit 13, an L2 cache unit 14, and a decoder 15. The functioning units illustrated in FIG. 1 are illustrated, of course, as an example; therefore, the instruction control device 10 may have, other than the above, a commonly-used functioning unit for a processor such as a register, a program counter, or a committing unit. Furthermore, the branch prediction mechanism 11 may also be referred to as a branch prediction unit; the instruction control unit 12 may be referred to as a first free-space determining unit or an instruction control unit; and the L1 cache unit 13 may be referred to as a second free-space determining unit.

The branch prediction mechanism 11 is connected to the instruction control unit 12 and predicts whether the next instruction that follows after the currently executed instruction is branched. If it is branched, the branch prediction mechanism 11 outputs an instruction containing a branch destination to a pipeline in the instruction control unit 12. Specifically, the branch prediction mechanism 11 performs a branch prediction by using an instruction fetch address received from the instruction control unit 12 and outputs the prediction result to the instruction control unit 12 in a cycle followed by the preceding cycle that receives the instruction fetch address. A method including a simple prediction method, a static prediction method, a next line prediction method, and the like can be used as a branch prediction method.

The instruction control unit 12 is a control unit that performs an instruction fetch control, an instruction prefetch control, instruction outputs to the decoder 15, and the like. The instruction control unit 12 principally includes an IBUFF 12a, an IFEAG 12b, and an IFCTL 12c.

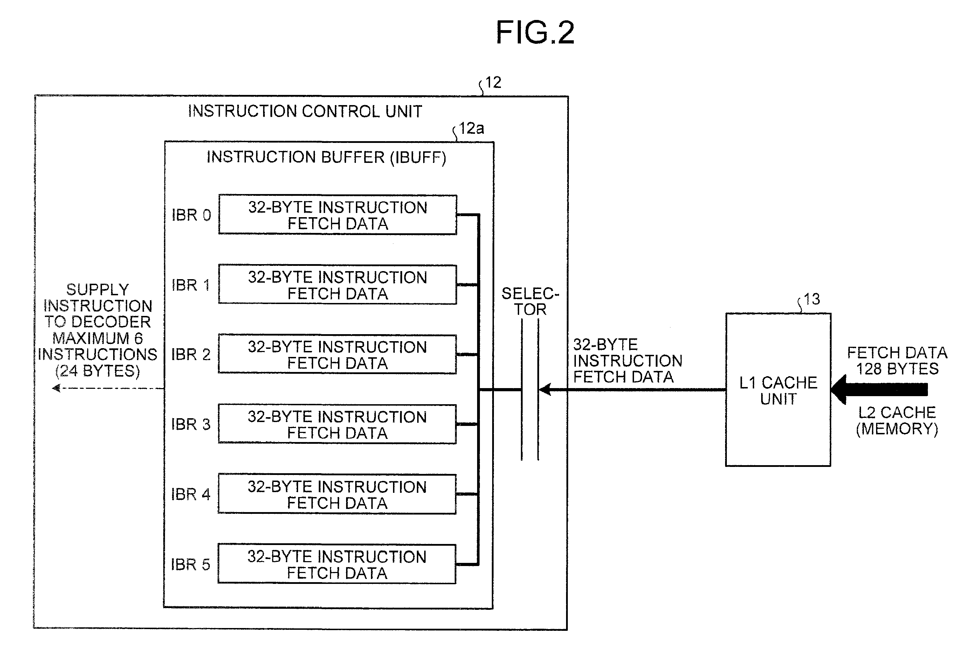

The IBUFF 12a is a buffer that temporarily stores therein instruction data obtained from the L1 cache unit 13 until the instruction data is supplied to the decoder 15. As illustrated in FIG. 2, the IBUFF 12a has six buffers (IBRs 0 to 5) that can store therein 32-byte data, where instruction fetch addresses are stored and associated with the corresponding buffers. FIG. 2 is a schematic diagram illustrating the configuration of the IBUFF and the connection relation between the IBUFF and the L1 cache.

The IFEAG 12b is a processing unit that creates instruction fetch addresses and instruction prefetch addresses and outputs them to the L1 cache unit 13 or the like. The IFCTL 12c is a control unit that outputs instruction fetch requests and instruction prefetch requests to the L1 cache unit 13.

In the following, the instruction fetch control and the instruction prefetch control that are executed by the instruction control unit 12 will be described.

### Instruction fetch control

The instruction fetch control executed by the instruction control unit 12 is executed in an instruction fetch pipe (pipeline) having five cycles (IA, IT, IM, IB, and IR).

### IA cycle

In an IA cycle, if an address of a first instruction is supplied from a program counter to the IFEAG 12b, the IFCTL 12c in the instruction control unit 12 sends, to the L1 cache unit 13, an instruction fetch request for the first instruction. Furthermore, at the same time when the IFCTL 12c sends the instruction fetch request, the IFEAG 12b sends an instruction fetch address to the L1 cache unit 13. The instruction fetch is performed in a unit of 32 bytes and one request can be sent in one cycle.

### IT cycle

In an IT cycle, the IFEAG 12b in the instruction control unit 12 sends, to the branch prediction mechanism 11, the instruction fetch address that is created in the IA cycle. At this time, the branch prediction mechanism 11 performs branch prediction using the received instruction fetch address.

### IM cycle

In an IM cycle, the IFCTL 12c in the instruction control unit 12 receives the prediction result from the branch prediction mechanism 11, and the IFEAG 12b receives a predicted branch prediction address from the branch prediction mechanism 11. The number of instruction fetch requests that can be sent to the L1 cache unit 13 is equal to the maximum number of IBRs in the IBUFF 12a. Accordingly, if an instruction fetch is sent for each cycle, instruction fetch pipes equal to up to six requests are operated. If a branch is predicted to be in the IM cycle, two requests, one of +32 bytes and one of +64 bytes, are sent to two respective cycles, i.e., the IT cycle and the IM cycle, respectively, in which branch prediction is performed. However, because these requests are not in accordance with the branch prediction result and are thus unnecessary request, these requests are canceled in an IB cycle.

### IB cycle

In the IB cycle, if there is free space in any one of the IBRs in the IBUFF 12a, the IFCTL 12c in the instruction control unit 12 outputs, to the L1 cache unit 13, an instruction fetch request using the branch prediction address received in the IM cycle. In the IB cycle, instruction data is sent from the L1 cache unit 13 to the IBUFF 12a.

### IR cycle

In an IR cycle, an IF-STV signal, which notifies that instruction data in the IBRs 0 to 5 is effective, is sent from the L1 cache unit 13 to the IFCTL 12c in the instruction control unit 12. If the process is completed up to the IR cycle, the instruction fetch is completed. The shortest cycle for supplying instruction data from the IBUFF 12a to the decoder 15 is the IR cycle. A single IBR holds 32-bytes of instruction data. One instruction is 4 bytes, and the decoder 15 can simultaneously process four instructions; therefore, an instruction can be supplied to the decoder 15 within one cycle or two cycles. After supplying all data, the IBR is reset and used for a new instruction fetch control.

As described above, in general, the instruction control unit 12 can send an instruction fetch request for each cycle but cannot send it in the following cases: (condition 1) a case in which all of the six buffer (IBRs 0 to 5) in the IBUFF are used; or (condition 2) a case in which the L1 cache unit 13 suffers a cache miss and thus a new instruction fetch request cannot be received due to a move-in queue from the L2 cache unit 14 or a move-out request issued from the L2 cache unit 14.

With the instruction control device, even when either one of the condition 1 or the condition 2 described above occurs, it is possible to perform the instruction prefetch control if there is free space in a move-in buffer (MIB) in the L1 cache unit 13. By performing the instruction prefetch control., when instruction data is not present in the L1 cache unit 13, it is possible to send a request to the L2 cache unit 14 ahead of time. A request control for the instruction prefetch control is performed by the IFCTL 12c, and addresses are created in the IFEAG 12b. The instruction prefetch control is performed from the instruction control unit 12 to the L1 cache unit 13 if the condition is satisfied regardless of whether the requested instruction data is in the L1 cache unit 13.

### Instruction prefetch control

In the following, the instruction prefetch control executed by the instruction control unit 12 will be described. When the above-described instruction fetch control is stopped due to either one of the condition 1 or the condition 2, the instruction control unit 12 performs an instruction prefetch control with respect to a preceding address that is possibly needed. Furthermore, in a similar manner as in the instruction fetch control performed by the instruction control unit 12, it is possible to perform the instruction prefetch control with respect to a plurality of addresses while performing branch prediction. For example, the IFCTL 12c determines the condition 1. The condition 2 is notified from the L1 cache unit 13 to the IFCTL 12c 1τ before the condition is satisfied (after output of a signal indicating that the L1 cache unit 13 performs a cache miss).

The L1 cache unit 13 searches for a cache with respect to the instruction prefetch address specified by the instruction control unit 12. If a cache hit does not occur, the L1 cache unit 13 outputs a request to the L2 cache unit 14. Regardless of whether a cache hit occurs, the L1 cache unit 13 does not need to send (respond), to the instruction control unit 12, instruction data with respect to the requested instruction prefetch request.

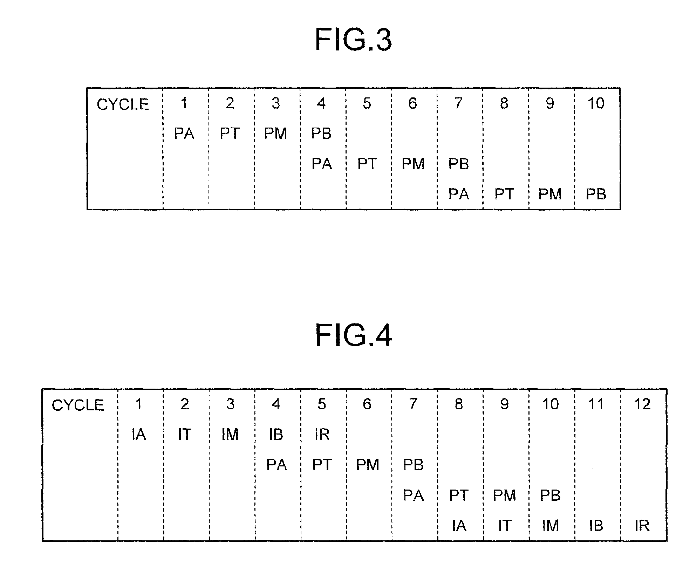

Thereafter, the instruction control unit 12 performs an instruction prefetch control using four independent pipes (PA, PT, PM, and PB) that are other than the above-described instruction fetch pipes having six cycles. Unlike the instruction fetch pipes, because the instruction control unit 12 cannot operate the PA, PT, and PM cycles when another PA, PT, and PM cycles are operated, the instruction control unit 12 performs a pipe control like that illustrated in FIG. 3. FIG. 3 is a schematic diagram illustrating an example of an instruction prefetch pipe control.

Furthermore, if the instruction fetch pipe and the instruction prefetch pipe are simultaneously operated, the instruction control unit 12 cannot operate the PA, PT, and PM cycles when the IA, IT, and IM cycle are operated. Still furthermore, the IA and PA cycles cannot be operated at the same time. However, in the PT, PM, and PB cycles, a new instruction fetch pipe can be operated. Accordingly, if the instruction fetch pipe and the instruction prefetch pipe are simultaneously operated, the instruction control unit 12 performs a pipe control like that illustrated in FIG. 4. FIG. 4 is a schematic diagram illustrating an example of the pipe control relation between an instruction fetch pipe and an instruction prefetch pipe.

The instruction control unit 12 sends an instruction prefetch request to the L1 cache unit 13 in the PA cycle, provided that branch prediction is performed and a branch destination address is supplied (condition 3). Furthermore, the instruction control unit 12 can send an instruction prefetch request to the L1 cache unit 13, provided that an instruction prefetch address indicates a line address boundary of the L1 cache (condition 4). Accordingly, the instruction control unit 12 cannot always send an instruction prefetch request just because the operation is performed in the PA cycle.

In the following, a method of creating instruction prefetch addresses will be described. The instruction prefetch addresses are created in the IFEAG 12b in the instruction control unit 12. The instruction prefetch address is the subsequent address following after an instruction fetch address that is stopped. The IFEAG 12b holds instruction fetch addresses that are output from the IBRs 0 to 5 until the instruction fetch addresses are reset in the respective IBRs. Furthermore, the IFEAG 12b creates and holds an address to be subsequently subjected to an instruction fetch. The IFEAG 12b also holds branch destination addresses subjected to branch prediction performed by the branch prediction mechanism 11.

If an instruction fetch that is stopped due to either one of the conditions, i.e., the condition 1 or the condition 2, attempts to request the next branch destination address subjected to branch prediction, the IFEAG 12b in the instruction control unit 12 sets the branch destination address as an instruction prefetch address without processing it.

Furthermore, if the stopped instruction fetch attempts to request an address other than the above, the IFEAG 12b in the instruction control unit 12 sets, if the address is a line boundary address of the L1 cache unit 13, the address as an instruction prefetch address. In contrast, if the address is not the line boundary address of the L1 cache, the IFEAG 12b of the instruction control unit 12 does not output an instruction prefetch.

However, if the IT cycle and the IM cycle are not started at this time, the IFEAG 12b in the instruction control unit 12 starts the PA cycle of the instruction prefetch pipe in the instruction fetch pipe. Then, if the IFEAG 12b in the instruction control unit 12 starts up the PA cycle, the IFEAG 12b starts the PT cycle after 1τ. In the PT cycle, an address to which 32 bytes are added (addition of 32 bytes) to a stopped address is set in the IFEAG 12b. At the same time, branch prediction with respect to the stopped instruction fetch address is started in the branch prediction mechanism 11.

Subsequently, in the PM cycle, the branch prediction mechanism 11 outputs the result of the branch prediction, and the IFEAG 12b determines whether the address that is set in the PT cycle is a line boundary of the L1 cache unit 13. If the branch prediction mechanism 11 determines that it is branched, the IFEAG 12b again sets the branch destination address predicted by the branch prediction mechanism 11 as an instruction prefetch address. In contrast, if the branch prediction mechanism 11 determines that it is not branched, the IFEAG 12b does not change the instruction prefetch address.

As described above, in the PM cycle, if the IFEAG 12b determines that the address is a line boundary of the L1 cache unit 13, or, if the branch prediction mechanism 11 determines that it is branched, the IFEAG 12b performs the following process. The IFEAG 12b issues an instruction prefetch request to the L1 cache unit 13 in the PB cycle after 1τ and starts up a new PA cycle. Furthermore, in the PM cycle, if the IFEAG 12b determines that the address is not a line boundary of the L1 cache unit 13, or, if the branch prediction mechanism 11 determines that it is not branched, the IFEAG 12b performs the following process: the IFEAG12b does not request an instruction prefetch request but starts a new PA cycle.

Thereafter, the instruction control unit 12 performs a new instruction prefetch pipe in a similar manner. If the instruction prefetch pipe is executed and if the instruction fetch pipeline is cleared, or, if a state of the condition 1 or the condition 2 no longer applies and an instruction fetch is resumed, the instruction control unit 12 clears the state. Furthermore, the instruction control unit 12 can operates the instruction prefetch pipeline as long as the states of condition 1 or condition 2 are maintained; however, the instruction control unit 12 can limit the number of instruction prefetch requests with respect to the L1 cache. In such a case, if the instruction control unit 12 sends, to the L1 cache, a number of instruction prefetch requests that is equal to the above limit, the instruction control unit 12 outputs a request, to the subsequent instruction prefetch pipeline, for a new instruction fetch and does not start until the state again becomes condition 1 or condition 2.

Referring back to FIG. 1, the L1 cache unit 13 is a high-speed cache memory that stores therein data (instructions or data) that is used more frequently than information stored in the L2 cache unit 14. Furthermore, the L1 cache unit 13 performs various kinds of controls with respect to instruction prefetch requests received from the instruction control unit 12.

Specifically, if the L1 cache unit 13 requests, due to a cache miss with respect to the received address, data from the L2 cache unit 14 and the subsequent unit arranged downstream of the L2 cache unit 14, the L1 cache unit 13 determines whether there is free space for two entries or more in the MIB. Then, if there is no free space for two entries or more in the MIB, the L1 cache unit 13 does not perform MIB allocation and waits until an abort is performed in the L1 cache unit 13 and thus a free space for two entries or more in the MIB becomes available.

The reason for this is because, if the stop state of the instruction fetch is released when the MIB is full due to data requests of the instruction prefetch, a new instruction fetch request cannot be received. The instruction fetch is resumed during a waiting period during which the data returns because the MTB is obtained in response to the instruction prefetch request. If an instruction fetch request having a cache line address equal to the instruction prefetch address is sent to the L1 cache unit 13, the data returning from the L2 cache unit 14 to the instruction prefetch is bypassed and then returned to the instruction control unit 12 as the subsequent instruction fetch data. If the L1 cache unit 13 cannot receive an instruction prefetch request, the L1 cache unit 13 turns on a signal (IF-SU-PREFCH-BUSY) indicating that state to the instruction control unit 12. Furthermore, if the L1. cache unit 13 cannot receive an instruction fetch request, the L1 cache unit 13 turns on another signal (IF-SU-BUSY). These two signals are different signals and independent of each other. Accordingly, the signal of IF-SU-PREFCH-BUSY is not always on just because the signal of IF-SU-BUSY is on, and vice versa. Furthermore, there can also be a case in which both of the signals are on.

Referring back to FIG. 2, the L2 cache unit 14 is a cache memory having larger capacity and lower-processing speed than the L1 cache unit 13 and having higher-processing speed than the main memory. The L2 cache unit 14 stores therein data (instruction or data) that is used relatively frequently.

The decoder 15 is a decoder that decodes instructions read from the IBUFF 12a in the instruction control unit 12. In addition to the units described above, the apparatus disclosed in this specification can have another commonly used functioning unit, such as a program counter or a commitment determining unit. Because the function thereof is the same as that of a functioning unit installed in a commonly used processor (a CPU, a MPU, etc.), description thereof in detail will be omitted here.

### Process performed by the instruction control device

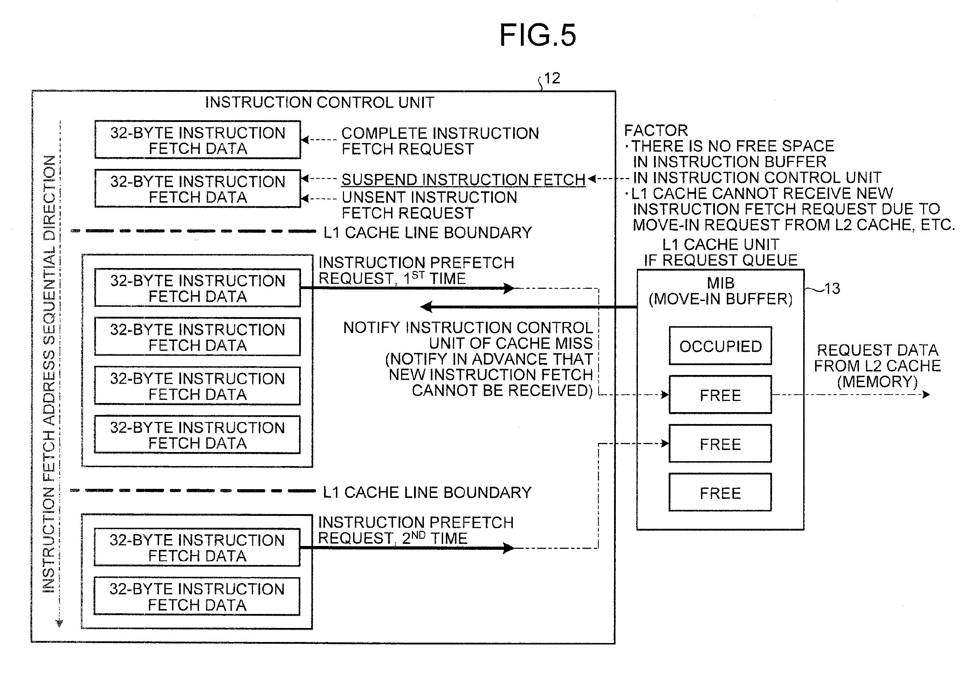

In the following, the flow of a process performed by the instruction control device according to the first embodiment will be described with reference to FIGS. 5 to 7. As illustrated in FIG. 5, if there is no free space in an instruction buffer (the IBUFF 12a, etc.) in the instruction control unit 12, the instruction control unit 12 stops the instruction fetch control. Furthermore, if the instruction control unit 12 is notified, from the L1 cache unit 13, that a new instruction fetch request cannot be received due to, for example, a move-in request from the L2 cache unit 14, the instruction control unit 12 stops the instruction fetch control. Because such cases correspond to the above-described condition 1 or condition 2, the instruction control unit 12 sends an instruction prefetch request to the L1 cache. Furthermore, the instruction control unit 12 sends the instruction prefetch request to the L1 cache until the condition 1 and the condition 2 no longer applies. However, it is possible to limit the number of request times; in the example illustrated in FIG. 5, the request is sent twice.

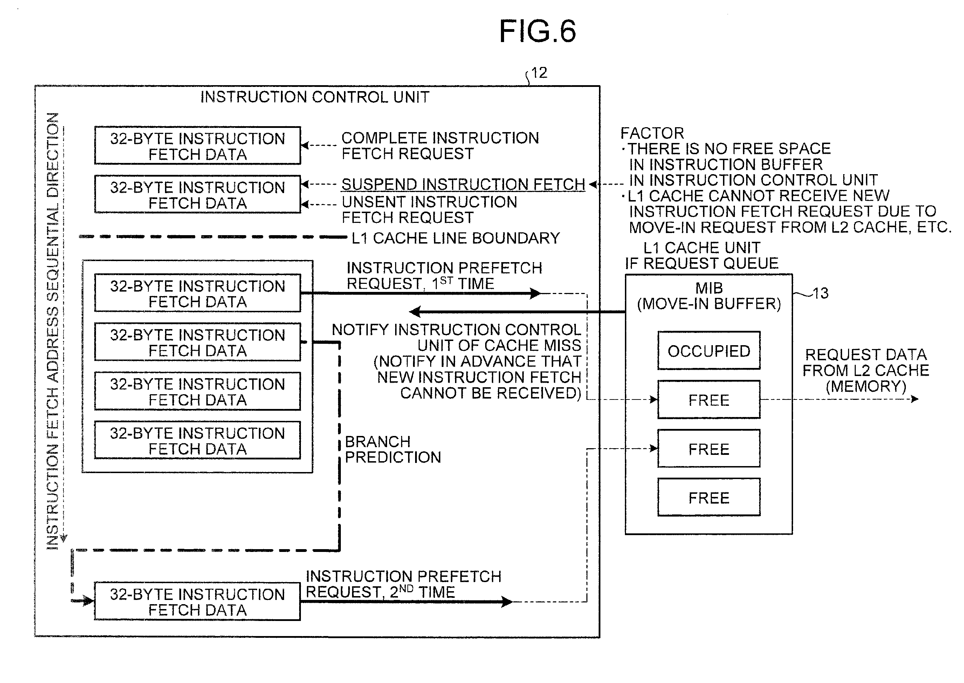

Furthermore, as illustrated in FIG. 6, if there is no free space in the instruction buffer (the IBUFF 12a, etc.) in the instruction control unit 12, the instruction control unit 12 stops the instruction fetch control. If the instruction control unit 12 receives a notification, from the L1 cache unit 13, indicating that a new instruction fetch request cannot be received due to, for example, a move-in request from the L2 cache unit 14, the instruction control unit 12 stops the instruction fetch control. Because such cases correspond to the above-described condition 1 or condition 2, the instruction control unit 12 sends an instruction prefetch request to the L1 cache. In the case illustrated in FIG. 6, the instruction control unit 12 sends the instruction prefetch request to the L1 cache unit 13 once and then sends a second instruction prefetch request to the L1 cache unit 13 using a branch prediction address that is predicted by the branch prediction mechanism 11.

As can be understood from FIGS. 5 and 6, because the L1 cache unit 13 outputs, to the instruction control unit 12, an indication that a new instruction fetch request cannot be received due to, for example, a move-in request from the L2 cache unit 14, the L1 cache unit 13 does not send an instruction prefetch request by itself. Accordingly, it is possible to perform the instruction prefetch control, which is normally independently performed by both the L1 cache and the instruction control unit, using only the instruction control unit, thus reducing the occurrence of, for example, unnecessary instruction prefetch requests and preventing performance degradation of the processor. FIG. 5 is a schematic diagram explaining an instruction prefetch control. FIG. 6 is a schematic diagram explaining an instruction prefetch control using a branch prediction result.

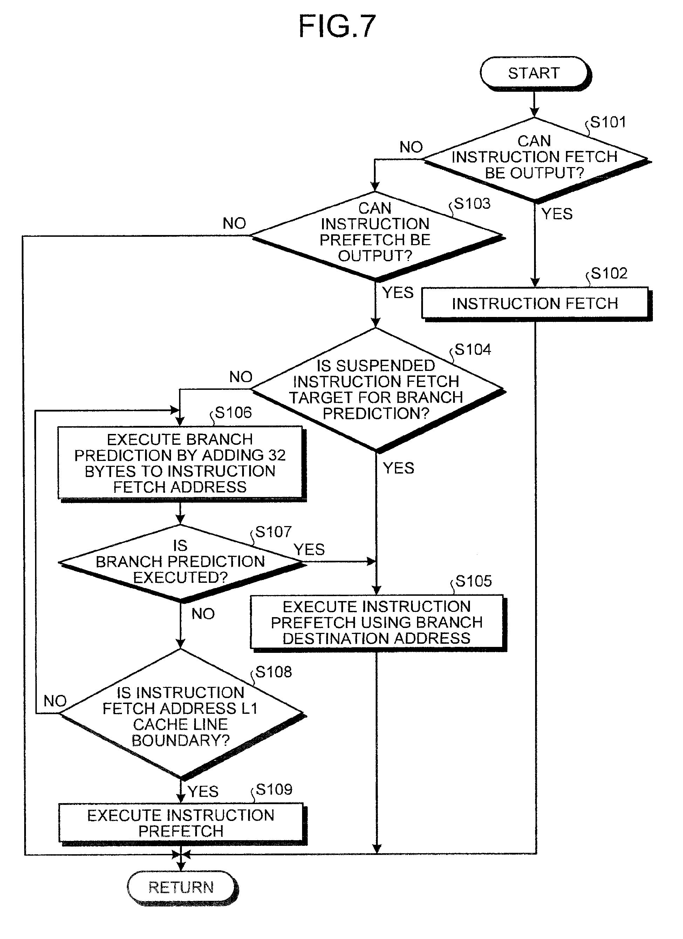

In the following, the flow of the process performed by the instruction control device according to the first embodiment will be described with reference to FIG. 7. FIG. 7 is a flowchart illustrating the flow of a process performed by the instruction control device according to the first embodiment.

As illustrated in FIG. 7, if the instruction control unit 12 determines that an instruction fetch request can be output (YES at Step S101), the instruction control unit 12 outputs the instruction fetch request to the L1 cache (Step S102).

In contrast, if the instruction control unit 12 determines that the instruction fetch request cannot be output (NO at Step S101), the instruction control unit, 12 determines whether an instruction prefetch request can be output to the L1 cache (Step S103). At this time, if the instruction control unit 12 determines that the instruction prefetch request cannot be output because there is no free space in the instruction buffer (IBUFF 12a) (NO at Step S103), the instruction control unit 12 repeats the processes by returning to Step S101. In a similar manner, if the instruction control unit 12 receives, from the L1 cache unit 13, a notification indicating that a new instruction fetch request cannot be received due to, for example, a move-in request from the L2 cache unit 14 (NO at Step S103), the instruction control unit 12 repeats the processes by returning to Step S101.

In contrast, if the instruction control unit 12 determines that an instruction prefetch request can be output because there is free space in the instruction buffer (YES at Step S103), the instruction control unit 12 determines whether the suspended instruction fetch is the target for the branch prediction (Step S104). Specifically, the instruction control unit 12 determines whether an address of an instruction fetch request destination, which is originally supposed to be executed but cannot be executed due to insufficient space or the line, is a branch prediction address (branch destination address) that is subjected to branch prediction performed by the branch prediction mechanism 11.

If the suspended instruction fetch is the target for the branch prediction (YES at Step S104), the instruction control unit 12 outputs the instruction prefetch request to the L1 cache unit 13 using the branch destination address predicted by the branch prediction mechanism 11 (Step S105). Then, the instruction control unit 12 repeats the processes by returning to Step S101. Specifically, if the address of an instruction fetch request destination, which is originally supposed to be executed but cannot be executed due to insufficient space or the like, is a branch destination address that is subjected to branch prediction performed by the branch prediction mechanism 11, the instruction control unit 12 outputs the instruction prefetch request to the L1 cache unit 13.

Furthermore, if the suspended instruction fetch is not the target for the branch prediction (NO at Step S104), the instruction control unit 12 outputs a request, to the branch prediction mechanism 11, for execution of the branch prediction using a new address obtained by adding 32 bytes to the current target instruction fetch address (Step S106). Specifically, if the address of an instruction fetch request destination, which is originally supposed to be executed but cannot be executed due to insufficient space or the like, is not a branch destination address that is subjected to branch prediction performed by the branch prediction mechanism 11, the instruction control unit 12 outputs a request, to the branch prediction mechanism 11, for execution of the branch prediction using a new address.

Then, if the branch prediction mechanism 11 performs the branch prediction (YES at Step S107), the instruction control unit 12 performs the process of Step S105. In contrast, if the branch prediction mechanism 11 does not perform the branch prediction (NO at Step S107), the instruction control unit 12 determines whether the current target instruction fetch address corresponds to the L1 cache line boundary (Step S108).

If the current target instruction fetch address corresponds to the L1 cache line boundary (YES at Step S108), the instruction control unit 12 issues an instruction prefetch request using that address (Step S109). In contrast, if the current target instruction fetch address does not correspond to the L1 cache line boundary (NO at Step S108), the instruction control unit 12 returns to Step S106 and performs the subsequent processes.

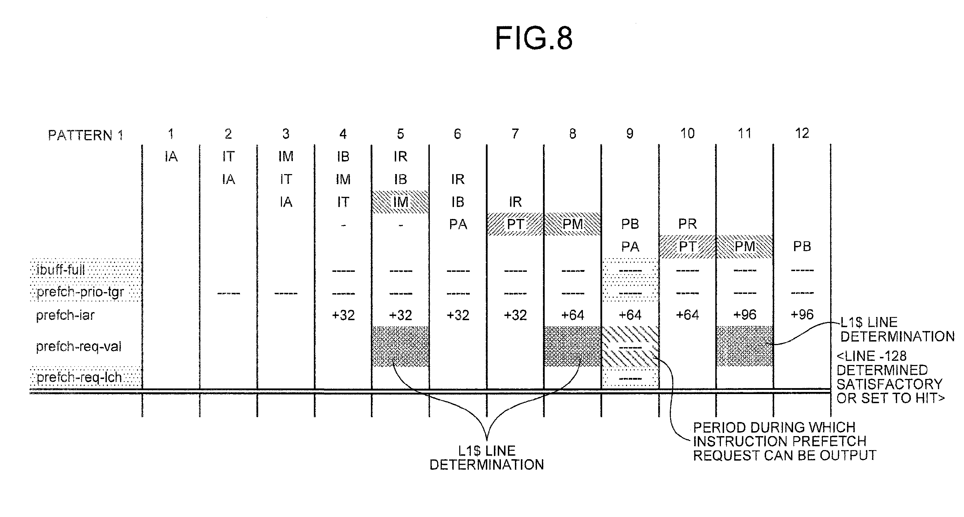

Timing chart for the instruction control device In the following, there will be a description, with reference to FIGS. 8 to 12, of examples of timing charts for an instruction, fetch control and an instruction prefetch control that are performed by the instruction control device. The timing charts illustrated here indicate a part of the operation and do not indicate the overall operation.

First, signals illustrated in FIGS. 8 to 12 will be described. An "IBUFF-FULL" is a signal indicating that all of the IBRs 0 to 5 are currently used. An instruction prefetch pipe can be started only when a "PREFCH-PRIO-TGR" signal is turned on. However, the instruction prefetch pipe is not always started up just because the "PREFCH-PRIO-TGR" signal is turned on.

A "PREFCH-IAR" is an address register for an instruction prefetch request held by the IFEAG 12b. The symbol "+32" means that 32 bytes are added to an address of the previous cycle. A "PREFCH-REQ-VAL" is an instruction prefetch request signal sent from the instruction control unit 12 to the L1 cache unit 13. A "PREFCH-REQ-LCH" is a signal indicating that an instruction prefetch condition and an instruction prefetch address are defined. An instruction prefetch request is not sent unless this signal is in an on state. A "PORT-BUSY" is a signal indicating that a new instruction fetch request cannot be received due to a cache miss in the L1 cache unit 13 and thus a new instruction fetch request cannot be received due to a move-in queue from the L2 cache unit 14 or a move-out request issued from the L2 cache unit 14. If this signal is turned on, an "IF-SU-BUSY" is turned on notifying, after 1τ, the instruction control unit 12 that the instruction fetch request cannot be received.

### Pattern 1

As illustrated in FIG. 8, pattern 1 is a pattern in which cycle 3 becomes the last cycle of the instruction fetch request. In pattern 1, the instruction control unit 12 cannot send an instruction fetch during cycles 4 to 12 because there is no free space in the IBRs 0 to 5 during these cycles. In the cycle 4, the symbol "PREFCH-IAR=+32" indicates that "32 bytes are added to the instruction fetch address output during cycle 3". In cycle 5, the instruction control unit 12 performs a branch prediction determination for the instruction fetch address that is output during cycle 3 and performs an L1 cache line boundary determination for the next 32-byte address in the sequential direction. In this case, because the instruction prefetch condition is not satisfied during cycle 5, the instruction control unit 12 does not output an instruction prefetch request during the PA cycle during cycle 6.

Furthermore, in cycle 8, the instruction control unit 12 determines that an address to which 64 bytes is added to an instruction fetch address that is output in cycle 3 is the L1 cache line boundary. Accordingly, the instruction control unit 12 turns on the "PREFCH-REQ-LCH" in cycle 9 and, at the same time, turns on the "PREFCH-REQ-VAL" to output the instruction prefetch request to the L1 cache unit 13. At this time, the instruction prefetch address sent to the L1 cache is an instruction fetch address that is output in the cycle 3 and to which 64 bytes is added. Each instruction prefetch address is an address to which 32 bytes are sequentially added in each cycle; therefore, there is a case in which an address straddles the line boundary of the L1 cache unit 13. However, because the line boundary is checked in the L1 cache unit 13, such a case is not a problem. FIG. 8 is a timing chart for a case in which cycle 3 becomes the last cycle of an instruction fetch request.

### Pattern 2

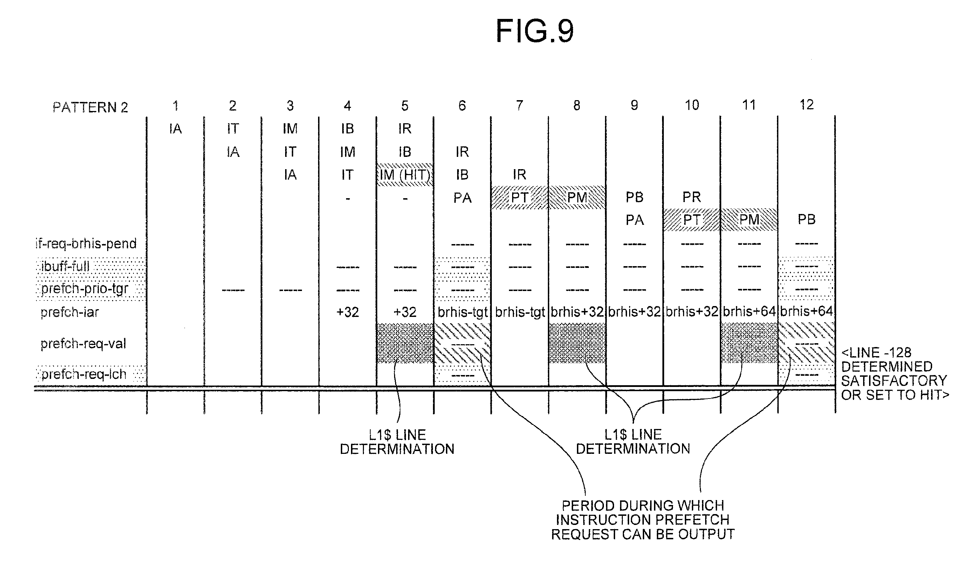

As illustrated in FIG. 9, the pattern 2 is a pattern in which the cycle 3 becomes the last cycle of the instruction fetch request and is a pattern in a case in which the instruction fetch request in the cycle 3 is predicted to be branched in cycle 5. The term "HIT" indicates that branching is predicted by the branch prediction. The term "BRHTS-TGT" indicates a branch destination address.

In cycle 6, the instruction control unit 12 sets an instruction prefetch address as the branch destination address, turns on the "PREFCH-REQ-LCH" and the "PREFCH-REQ-VAL", and outputs the instruction prefetch request to the L1 cache unit 13. Furthermore, the instruction control unit 12 outputs an instruction prefetch request in cycle 12 because the instruction control unit 12 determines that the address obtained by adding, in cycle 11, 64 bytes to the "BRHIS-TGT" that corresponds to the instruction prefetch address in cycle 6 is the L1 cache line boundary. FIG. 9 is a timing chart in a case in which cycle 3 becomes the last cycle of the instruction fetch request and is predicted to be branched in a cycle 5.

### Pattern 3

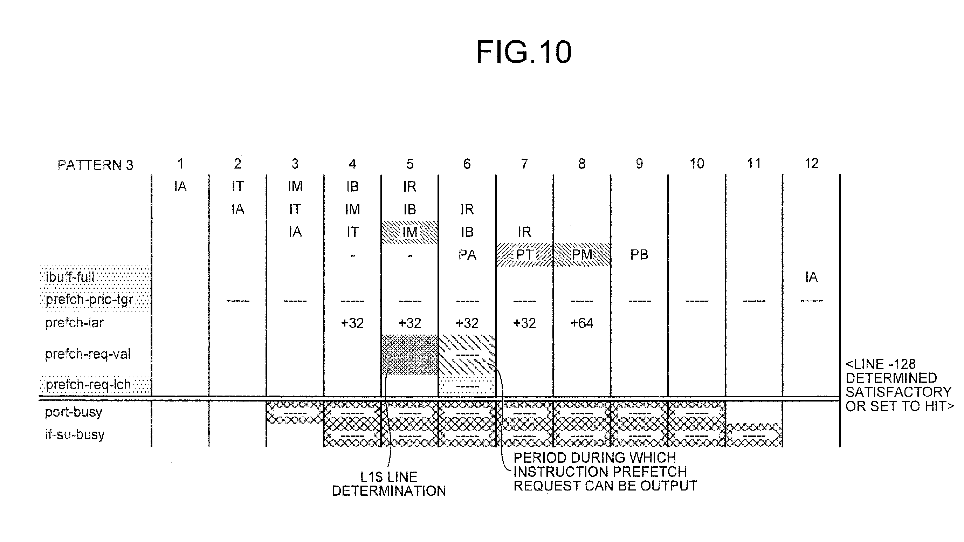

As illustrated in FIG. 10, in pattern 3, because the "PORT-BUSY" signal is turned on between cycles 3 and 10, the "IF-SU-BUSY" is turned on between cycles 4 and 11; therefore, an instruction fetch request is stopped. In such a case, the instruction control unit 12 resumes the instruction fetch by turning off the "IF-SU-BUSY" in cycle 12. The instruction fetch address in this case is a subsequent address from the instruction fetch in cycle 3. Because the instruction fetch in cycle 3 is not subjected to branch prediction, the instruction fetch address in this case is obtained by adding 32 bytes to the instruction fetch address that is output in cycle 3. FIG. 10 is a timing chart in a case in which an instruction fetch request stops due to the FORT-BUSY signal.

### Pattern 4

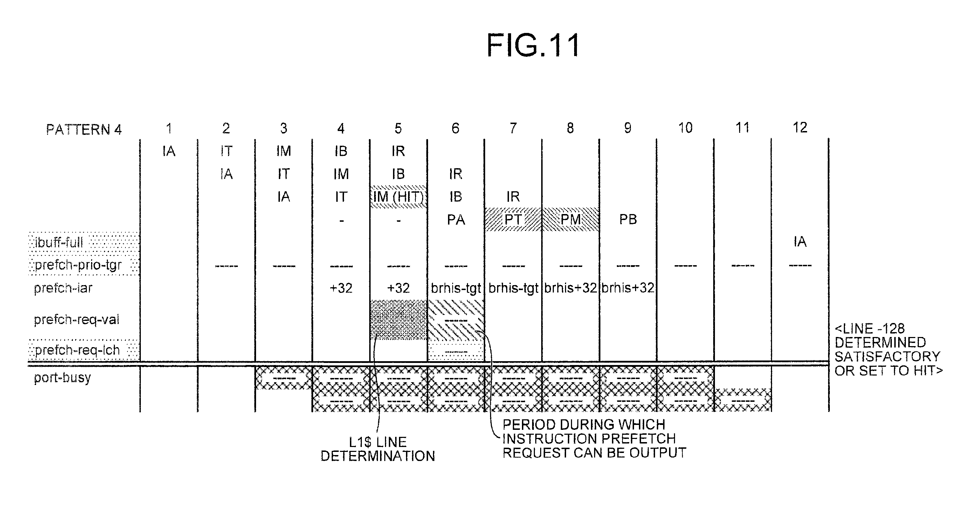

As illustrated in FIG. 11, pattern 4 is a pattern in which, in a similar manner to pattern 3, the instruction fetch in cycle 3 is predicted to be branched in cycle 5. Accordingly, the instruction control unit 12 sets an instruction fetch address obtained when an instruction fetch is resumed in the cycle 12 as the "BRHIS-TGT". FIG. 11 is a timing chart in a case in which an instruction fetch in cycle 3 is predicted to be branched in cycle 5.

### Pattern 5

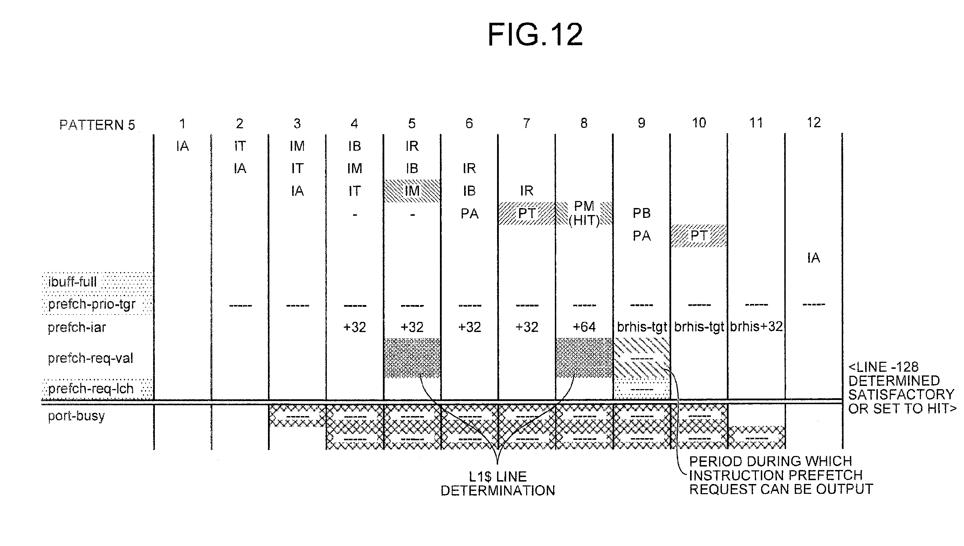

As illustrated in FIG. 12, pattern 5 is a pattern in which, in a similar manner to pattern 3, the "IF-SU-BUSY" is turned off during cycle 12 and the instruction fetch is resumed. The instruction fetch address in this case is a subsequent address from the instruction fetch in the cycle 3. Because the instruction fetch in cycle 3 is not subjected to branch prediction, the instruction fetch address in this case is obtained by adding 32 bytes to the instruction fetch address that is output in the cycle 3. Because the branch prediction is performed during a prefetch piping (cycle 8), the instruction control unit 12 performs, in advance, an instruction prefetch on an address after the instruction fetch request that is resumed in cycle 12. FIG. 12 is a timing chart in a case in which the instruction fetch resumes in cycle 12.

### Advantage of the first embodiment

As described above, according to the first embodiment, an instruction prefetch control, which is normally independently performed by both the L1 cache unit 13 and the instruction control unit 12, is performed using only the instruction control unit 12. As a result, it is possible to reduce the occurrence of, for example, unnecessary instruction prefetch requests and thus to prevent performance degradation of the processor.

Furthermore, according to the first embodiment, the instruction prefetch pipeline can be operated as long as the state of (condition 1) or (condition 2) is maintained; however, it is possible to limit the number of instruction prefetch requests with respect to the L1 cache. As a result, it is possible to reduce the occurrence of, for example, unnecessary instruction prefetch requests, thus further preventing performance degradation of the processor.

### [b] Second Embodiment

The embodiments of the information processing unit disclosed in this specification have been described; however the instruction control device is not limited thereto and can be implemented with various kinds of embodiments other than the embodiments described above. Therefore, another embodiment will be described below.

### Number of pipelines

The number of instruction fetch pipelines or instruction prefetch pipelines described in the first embodiment is just an example and is not limited thereto.

### System configuration, etc.

The components of each device illustrated in the drawings are only for conceptually illustrating the functions thereof and are not necessarily physically configured as illustrated in the drawings. In other words, the specific shape of a separate or integrated device is not limited to the drawings; however, all or part of the device can be configured by functionally or physically separating or integrating any of the units depending on various loads or use conditions. For example a plurality of CPU cores can be provided. Furthermore, all or any of the processing functions performed by each unit can be implemented by a CPU, MPU, and programs that are analyzed and executed by the CPU or the MPU or can be implemented as hardware by wired logic.

Of the processes described in the embodiments, the whole or a part of the processes that are mentioned as being automatically performed can be manually performed, or the whole or a part of the processes that are mentioned as being manually performed can be automatically performed using known methods. Furthermore, process procedures, the control procedures, the specific names, and the information containing various kinds of data or parameters indicated in the above specification and drawings can be arbitrarily changed unless otherwise noted.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

According to an aspect of an instruction control device, an instruction control method, and an arithmetic circuit disclosed in the present invention, it is possible to reduce the occurrence of, for example, unnecessary instruction prefetch requests and thus to prevent performance degradation of a processor.

## Claims

1. A processor (10) connecting to a cache memory that stores data frequently used among data stored in a main memory, the processor comprising:
a first free-space determining unit (12) that determines whether there is free space in an instruction buffer that stores therein instruction fetch data received from the cache memory;
a second free-space determining unit (13) that manages an instruction fetch request queue that stores an instruction fetch data to be sent from the cache memory to the main memory, and determines whether a move-in buffer in the cache memory has free space for at least two entries if the first free-space determining unit determines that there is free space in the instruction buffer; and
an instruction control unit (12) that outputs an instruction prefetch request to the cache memory in accordance with an address boundary corresponding to a line size of the cache line, if the second free-space determining unit (13) determines that the move-in buffer in the cache memory has free space for at least two entries.

2. The processor (10) according to claim 1, further comprising:
a cache memory determining unit that determines whether the cache memory is in a state in which a new instruction fetch request cannot be received because the cache memory is waiting for a response from another cache memory or the main memory or because the cache memory has received a request from another cache memory,
wherein the second free-space determining unit (13) determines whether the move-in buffer in the cache memory has free space for at least two entries, if the cache memory determining unit determines that the cache memory is in a state in which a new instruction fetch request cannot be received.

3. The processor according to claim 1 or 2, further comprising
a branch prediction unit (11) that determines whether an instruction is branched, and predicts a branch destination address if the branch prediction unit (11) determines that the instruction is branched wherein
the instruction control unit outputs the instruction prefetch request with the branch destination address to the cache memory, if the second free-space determining unit determines that the move-in buffer in the cache memory has free space for at least two entries and the branch prediction unit predicts the branch destination address.

4. An instruction control method comprising:
determining whether there is free space in an instruction buffer that stores therein instruction fetch data received from a cache memory that stores data frequently used among data stored in a main memory;
managing an instruction fetch request queue that stores instruction fetch data to be sent from the cache memory to the main memory, and determines whether a move-in buffer in the cache memory has free space for at least two entries if it is determined that there is free space in the instruction buffer;
determining whether a move-in buffer in the cache memory has free space for at least two entries or more; and
outputting an instruction prefetch request to the cache memory in accordance with an address boundary corresponding to a line size of the cache line, if the move-in buffer in the cache memory has free space for at least two entries.

5. The instruction control method according to claim 4, further comprising
determining whether the cache memory is in a state in which a new instruction fetch request cannot be received because the cache memory is waiting for a response from another cache memory or the main memory or because the cache memory has received a request from another cache memory, and
determining whether the move-in buffer in the cache memory has free space for at least two entries or more, if it is determined that the cache memory is in a state in which a new instruction fetch request cannot be received.

6. The instruction control method according to claim 4 or 5, further comprising
determining whether an instruction is branched, and predicting a branch destination address if the instruction is branched, wherein
the instruction prefetch request is output to the cache memory with the branch destination address, when the move-in buffer in the cache memory has free space for at least two entries and the branch destination address is predicted.
